# EUROPÄISCHE PATENTSCHRIFT

(11) **EP 1 340 129 B1**
(45) Veröffentlichungstag und Bekanntmachung des Hinweises auf die Patenterteilung: **09.02.2011**
(21) Anmeldenummer: 01989551.5
(22) Anmeldetag: 01.12.2001
(51) Int. Cl.: G05B 23/02

(54) **Vorrichtung zur System- und/oder Prozessüberwachung**
Device for system and/or process monitoring
Dispositif de surveillance de système et/ou de processus

(30) Priorität: 07.12.2000 DE 10060706
(43) Veröffentlichungstag der Anmeldung: 03.09.2003
(73) Patentinhaber: Endress + Hauser Flowtec AG, 4153 Reinach BL 1 (CH)
(72) Erfinder: BUDMIGER, Thomas, CH-4107 Ettingen (CH)
(74) Vertreter: Andres, Angelika Maria
(86) Internationale Anmeldenummer: PCT/EP2001/014053
(87) Internationale Veröffentlichungsnummer: WO 2002/046851

(56) Entgegenhaltungen:
- US-A- 4 558 227
- US-A- 4 764 882
- US-A- 4 792 912
- US-A- 4 908 775
- US-A- 5 157 619
- US-A- 5 528 940
- US-A- 5 623 426

## Beschreibung

Die Erfindung bezieht sich auf eine Vorrichtung zur System- und/oder Prozeßüberwachung fur ein magnetisch-induktives Durchflußmeßgerät zur Bestimmung/Überwachung des Massedurchflusses oder des Volumendurchflusses eines Mediums durch ein Meßrohr, das von einem Medium in Richtung der Meßrohrlängsachse durchflossen wird, die Vorrichtung bestehend aus einer Magnet-anordnung mit zwei Elektromagneten, mit zumindest einer Messelektrode, und einer Auswerte-/Regeleinheit, wobei die Magnetanordnung ein das Messrohr durchsetzendes und im wesentlichen quer zur Meßrohrlängsachse verlaufendes Magnetfeld erzeugt, wobei die zumindest eine Meßelektrode in einem seitlichen Bereich des Meßrohres angeordnet ist und galvanisch oder kapazitiv mit dem Medium gekoppelt ist, und wobei die Auswerte-/Regeleinheit anhand einer in die Meßelektrode induzierten Meßspannung Information über den Volumenstrom des Mediums in dem Meßrohr liefert,

Im Zusammenhang mit der Bestimmung und/oder Überwachung von Prozeßgröβen geht die Tendenz zunehmend in die Richtung, dem Anwender neben dem eigentlichen Meßgerät auch Information über die Arbeitsweise oder die Lebensdauer des Meßgerätes unter den jeweils vorherrschenden System-und/oder Prozeßbedingungen zur Verfügung zu stellen. Gängige Schlagworte sind in diesem Zusammenhang 'Predictive Maintenance' und 'Meantime Before Failure'. Ziel dieser Bemühungen ist es letztendlich, Stand- und Ausfallzeiten eines Meßgeräts auszuschließen oder auf ein Minimum zu reduzieren.

Aus der US- 5,157,619 ist es bekannt geworden, Temperatursensoren auf der Außenfläche einer Rohrleitung in Form eines Kreisbogens anzuordnen, wobei die Ebene, in der die Temperatursensoren angeordnet sind, senkrecht zur Fließrichtung eines in der Rohrleitung strömenden Mediums ausgerichtet ist. Anhand der von den Temperatursensoren gelieferten Messwerte, wird die Spannungsbelastung der Rohrleitung positonsabhängig aufgezeichnet. Außerordentliche thermische Belastungen des Systems werden so erkennbar, und es können Rückschlüsse auf die Materialermüdung gezogen werden.

Aus der US- 4,792 912 ist es bekannt geworden, eine Aussage hinsichtlich der Temperaturverteilung bzw. der Materialspannung in radialer Richtung in der Rohrwand eines Druckteils eines Boilers zu treffen. Zwecks Überwachung der Spannungsbelastung in der Rohrwand sind Temperatursensoren aquidistant in der Rohrwand angeordnet. Insbesondere wird in der Patentschrift vorgeschlagen, die Aufeinanderfolge der gelieferten Information so auszulegen, dass im Falle großer Änderungen der Belastung die Informationsbereitstellung schneller erfolgt, als im Falle von kleinen Belastungsänderungen.

Der Erfindung liegt die Aufgabe zugrunde, eine Vorrichtung vorzuschlagen, die es ermöglicht, Aussagen hinsichtlich der gegenwärtigen und zukünftigen Funktionalität eines Meßgeräts bzw. einzelner Komponenten des Meßgeräts bereitzustellen.

Die Aufgabe wird dadurch gelöst, daß die Auswerte-/Regeleinheit den Widerstand zumindest eines Elektromagneten über einen längeren Zeitraum überwacht, daß die Auswerte-/Regeleinheit anhand der gemessenen Widerstandswerte die Temperatur bzw. die Temperaturänderung des Elektromagneten bestimmt und daß die Auswerte-/Regeleinheit die ermittelten Temperaturwerte des zumindest einen Elektromagneten für eine Trendanalyse hinsichtlich der thermischen Belastung des magnetisch-induktiven Meßgeräts bzw. im Hinblick auf die thermische Belastung einzelner Komponenten des magnetisch-induktiven Meßgeräts nutzt.

Als besonders günstige Ausgestaltung der erfindungsgemäßen Vorrichtung wird nachfolgend ein magnetisch-induktives Durchflußmeßgerät näher beschrieben. Magnetisch-induktive Durchflußmeßgeräte nutzen für die volumetrische Strömungsmessung das Prinzip der elektrodynamischen Induktion aus: Senkrecht zu einem Magnet-feld bewegte Ladungsträger des Meßmediums induzieren in gleichfalls im wesentlichen senkrecht zur Durchflußrichtung des Meßmediums angeordne-ten Meßelektroden eine Spannung. Diese Induktionsspannung ist proportional zu der über den Querschnitt des Rohres gemittelten Strömungsgeschwindigkeit des Meßmediums; sie ist also proportional zum Volumen-strom.

Üblicherweise weist ein magnetisch-induktives Meßgerät ein Meßrohr, eine Magnetanordnung mit zwei Elektromagneten, zumindest einer Meßelektrode und eine Auswerte-/Regeleinheit auf. Das zu messende oder zu über-wachende Medium durchfließt das Meßrohr in Richtung der Meßrohrlängs-achse. Die Magnetanordnung erzeugt ein das Meßrohr durchsetzendes und im wesentlichen quer zur Meßrohrlängsachse verlaufendes Magnetfeld. Die zumindest eine Meßelektrode ist in einem seitlichen Bereich des Meßrohres angeordnet und galvanisch oder kapazitiv mit dem Medium gekoppelt. Die Auswerte-/Regeleinheit liefert anhand einer in die Meßelektrode induzierten Meßspannung Information über den Volumenstrom des Mediums in dem Meßrohr.

Gemäß einer Ausgestaltung der erfindungsgemäßen Vorrichtung handelt es sich bei der Einheit zur Bestimmung der Temperaturwerte oder der Ableitungen der Temperaturwerte um einen Temperatursensor. Dieser ist so angeordnet, daß er mit dem Medium in Kontakt kommt, oder er ist so angeordnet, daß er in unmittelbarer Nähe zu dem Medium angeordnet ist und einen Wert für die Temperatur des Meßsystems liefert. Gebräuchliche Temperatursensoren sind PTC-Elemente, z.B. ein PT 100, NTC-Elemente, Thermoelemente, Halbleitersensoren, usw.

Insbesondere wird die Information über die langfristige Temperaturbelastung bzw. die Information über die kurzfristige Temperaturstoßbelastung dazu genutzt, eine Aussage hinsichtlich der Lebensdauer des Meßgerätes bzw. hinsichtlich der Lebensdauer einzelner Komponenten des Meßgerätes zu treffen.

Gemäß einer vorteilhaften Weiterbildung der erfindungsgemäßen Vorrichtung ist eine Speichereinheit vorgesehen, in der die Widerstandswerte des Elektromagneten in Abhängigkeit von der Temperatur gespeichert sind. Vorzugs-weise sind in der Speichereinheit Kennlinien abgelegt, die den Widerstand des Elektromagneten bzw. Widerstandsänderungen des zumindest einen Elektromagneten in Beziehung zu der Temperatur bzw. zu Temperaturänderungen des Meßgeräts und damit auch in Beziehung zu der Temperatur bzw. zu Temperaturänderungen des Mediums setzen.

Weiterhin ist vorgesehen, daß in der Speichereinheit Kennlinien gespeichert sind, die eine Beziehung zwischen der Temperatur des Elektromagneten bzw. des Meßgeräts und der voraussichtlichen Lebensdauer des Meßgeräts bzw. einzelner Komponenten des Meßgeräts bereitstellen.

Hierbei hat es sich als besonders günstig herausgestellt, wenn es sich bei den Kennlinien um empirisch ermittelte Kennlinien handelt.

Es versteht sich von selbst, daß die Temperatur des zumindest einen Elektromagneten nicht ohne weiteres gleichzusetzen ist mit der Temperatur des Mediums bzw. mit der Temperatur des Meßgeräts. So kann eine kurzfristige Abkühlung bzw. die Erwärmung des Mediums über die Umgebung gewisse Temperaturunterschiede verursachen. Desweiteren spielen unterschiedliche Nennweiten der Meßrohre eine Rolle, ebenso wie die elektrische Aufheizung des bzw. der Elektromagneten. Dennoch läßt sich anhand der erfindungsgemäßen Vorrichtung die thermische Belastung bzw. Spitzenbelasung des Meßgeräts mit hinreichend großer Sicherheit ermitteln.

Gemäß einer einfachen und praktikablen Ausgestaltung der erfindungsgemäßen Vorrichtung wird vorgeschlagen, daß eine Ausgabe-/Anzeigeeinheit vorgesehen ist, über die dem Bedienpersonal das Ergebnis bzw. das Zwischenergebnis der Trendanalyse, insbesondere die voraussichtliche Lebensdauer des Meßgeräts, mitgeteilt wird.

Die Erfindung wird anhand der nachfolgenden Zeichnungen näher erläutert. Es zeigt:
Fig. 1: eine schematische Darstellung einer bevorzugten der erfindungsgemäßen Vorrichtung und
Fig. 2: ein Flußdiagramm zur Ansteuerung der Auswerte-/Regeleinheit.

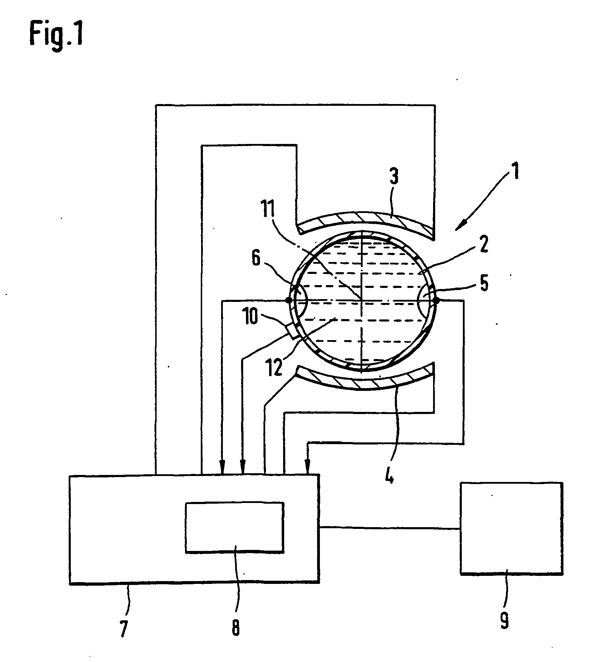

Fig. 1 zeigt eine schematische Darstellung einer Ausführungsform der erfindungsgemäßen Vorrichtung. Die Ausführungsform bezieht sich auf ein magnetisch-induktives Meßgerät 1. Das Meßrohr 2 des Meßgeräts 1 wird von dem Medium 12 in Richtung der Meßrohrachse 11 durchflossen. Das Medium 12 ist zumindest in geringem Umfang elektrisch leitfähig. Das Meßrohr 2 selbst ist aus einem nicht leitfähigen Material gefertigt, oder es ist zumindest an seiner Innenseite mit einem nicht leitfähigen Material ausgekleidet.

Infolge des senkrecht zur Flußrichtung des Mediums 12 ausgerichteten Magnetfeldes, das von den beiden diametral angeordneten Elektromagneten 3, 4 erzeugt wird, wandern in dem Medium 12 befindliche Ladungsträger zu der entgegengesetzt gepolten Meßelektrode 5, 6 ab. Die sich zwischen den beiden Meßelektroden 5, 6 aufbauende Spannung ist proportional zu der über den Querschnitt des Meßrohres 2 gemittelten Strömungsgeschwindigkeit des Mediums 12, d. h. sie ist ein Maß für den Volumenstrom des Mediums 12 in dem Meßrohr 2. Das Meßrohr 2 ist übrigens über Verbindungselemente, die in der Zeichnung nicht gesondert dargestellt sind, mit einem Rohrsystem, durch das das Medium hindurchströmt, verbunden.

Im gezeigten Fall befinden sich die beiden Meßelektroden 5, 6 in direktem Kontakt mit dem Medium 12; allerdings kann die Ankopplung auch kapazitiv erfolgen. Die Meßelektroden 5, 6 sind ebenso wie die Elektromagneten 3, 4 über Verbindungsleitungen mit der Auswerte-/Regeleinheit 7 verbunden. Obwohl nachfolgend die Messungen stets an einem Elektromagneten 3; 4 vorgenommen werden, ist es selbstverständlich auch möglich, die Messungen an beiden Elektromagneten 3, 4 gleichzeitig oder abwechselnd durchzu-führen.

Gemäß einer bevorzugten Ausgestaltung der erfindungsgemäßen Vorrichtung ermittelt die Auswerte-/Regeleinheit 7 die jeweils an dem Elektromagneten 3; 4 anliegende Spannung U sowie den momentan durch den Elektromagneten 3; 4 fließenden Strom I. Gemäß der Formel R = U / I errechnet die Auswerte-/Regeleinheit 7 den entsprechenden Widerstand R des Elektromagneten 3; 4. Da der Widerstand R temperaturabhängig ist, läßt sich aus den Widerstands-werten R die Temperatur T des Elektromagneten 3; 4 bestimmen. Vorzugs-weise werden Langzeitmessungen durchgeführt, wobei die gemessenen Widerstandswerte R bzw. die aus den Widerstandswerten R abgeleiteten Temperaturwerte T Indikatoren für die allgemeine thermische Belastung und damit die Lebensdauer des Meßgeräts 1 darstellen.

Selbstverständlich ist es auch möglich, alternativ zu oder kombiniert mit den direkt oder indirekt ermittelten Temperaturwerten die Ableitungen der Temperaturwerte für die Trendananlyse heranzuziehen. Die Ableitungen der Temperaturwerte liefern wertvolle Information über die Temperaturstoß-belastung des Meßgeräts. Darüber hinaus kann - wie in der Fig. 1 gleichfalls zu sehen ist - die Temperatur über einen separaten Temperatursensor 10 bestimmt werden. Die von dem Temperatursensor 10 ermittelten Temperaturwerte werden von der Auswerte-/Regeleinheit 7 nachfolgend ebenfalls dazu verwendet, beispiels-weise tendenzielle Aussagen über die Lebensdauer des Meßgeräts 1 zu treffen.

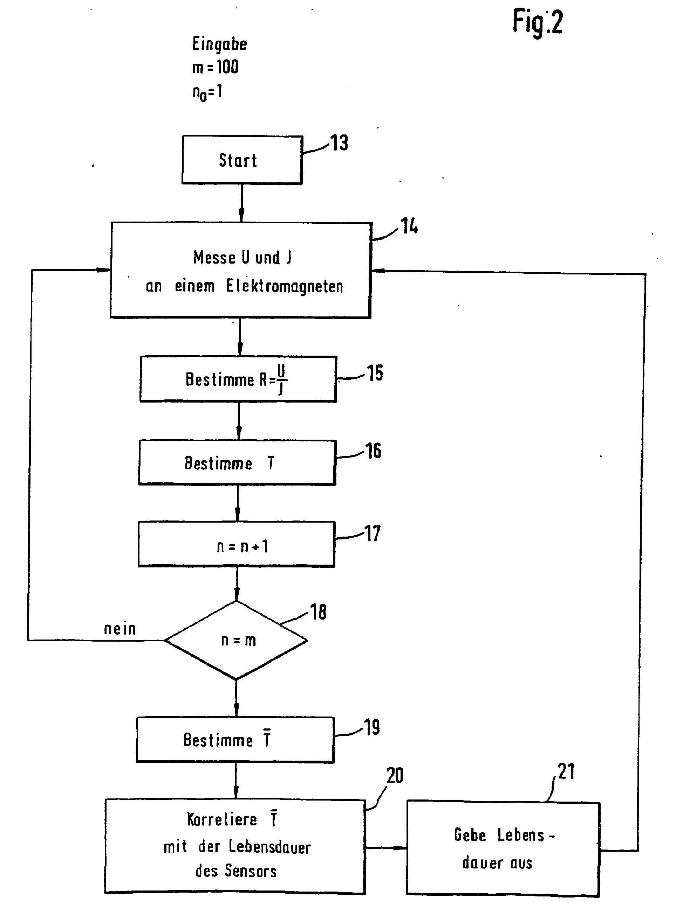

In Fig. 2 ist ein Flußdiagramm zur Ansteuerung der Auswerte-/Regeleinheit 7 dargestellt. Vorzugsweise wird die Lebensdauer des Meßgeräts 1 oder von einzelnen Komponenten des Meßgeräts 1 über eine Langzeitstudie ermittelt. Der Auswerte-/Regeleinheit 7 wird daher vor dem Start des Programms bei Punkt 13 der Startwert *n*₀ und der Endwert m für die Anzahl der durchzuführenden Messungen vorgegeben. Bei Programmpunkt 14 wird die Spannung U und die Stromstärke I des Elektromagneten 3; 4 bestimmt; anhand der gemessenen Spannung U und der gemessenen Stromstärke I wird bei Punkt 15 der Widerstand R des Elektromagneten 3; 4 ermittelt. Nachfolgend wird bei Programmpunkt 16 anhand des Widerstandes R die Temperatur T des Elektromagneten 3; 4 bereitgestellt. Die Programmschleife zur Ermittlung der Temperaturwerte T des Elektromagneten 3; 4 wird solange durchlaufen, bis die Anzahl der vorbestimmten Messungen vorliegt. Anhand der gemessenen und ermittelten Temperaturwerte T wird unter dem Programmpunkt 19 ein Mittelwert gebildet. Über eine in der Speichereinheit 9 abgespeicherte Kennlinie wird diese mittlere Temperatur in Beziehung zu der wahrscheinlichen Lebensdauer des Meßgeräts 1 gesetzt. Dem Bedienpersonal wird die ermittelte Lebensdauer des Meßgeräts 1 über eine Ausgabe-/Anzeigeeinheit 9 zur Kenntnis gebracht.

Da es sich bei den Messungen bevorzugt um Langzeitmessungen handelt, wird quasi das zeitliche Integral über die Temperaturwerte T gebildet, wobei die Meßwerte zumindest in tendenzieller Sicht Aufschluß über die thermische Belastung des Meßgeräts 1 in einem entsprechend gewählten Zeitraum geben. Oder anders ausgedrückt: Die Meßwerte stellen einen Indikator für die thermische Belastung und damit die voraussichtliche Lebensdauer des Meßgeräts 1 bzw. einzelner Komponenten des Meßgeräts 1 dar. Anhand der Meßwerte läßt sich dann beispielsweise die 'Meantime Before Failure' ermitteln. Unter Nutzung der erfindungsgemäßen Vorrichtung ist es folglich nicht mehr nötig zuzuwarten, bis das Meßgerät 1 gänzlich ausfällt. Auch ist es nicht mehr notwendig, das Meßgerät 1 unabhängig von seiner tatsächlichen Funktionstüchtigkeit nach einer fest vorgegebenen Zeitspanne präventiv auszutauschen. Vielmehr läßt sich anhand der nunmehr möglichen Trendanalyse die wahrscheinliche Lebenserwartung des Meßgeräts 1 vorab ermitteln. Ein Austausch des Meßgeräts 1 oder einzelner Komponenten des Meßgeräts 1 kann dann exakt zu dem Zeitpunkt erfolgen, an dem die Funktionalität nicht mehr gewährleistet ist.

## Patentansprüche

1. Magnetischinduktives Durchflußmeßgerät zur Bestimmung/Überwachung des Massedurchflusses oder des Volumendurchflusses eines Mediums durch ein Meßrohr (2), das von einem Medium (12) in Richtung der Meßrohrlängsachse (11) durchflossen wird, welches eine Magnetanordnung mit zwei Elektromagneten (3, 4), zumindest eine Messelektrode (5; 6) und eine Auswerte-/Regeleinheit aufweist (7), wobei die Magnetanordnung ein das Messrohr (2) durchsetzendes und im wesentlichen quer zur Meßrohrlängsachse (11) verlaufendes Magnetfeld erzeugt,
wobei die zumindest eine Meßelektrode (5; 6) in einem seitlichen Bereich des Meßrohres (2) angeordnet ist und galvanisch oder kapazitiv mit dem Medium (12) gekoppelt ist, und wobei die Auswerte-/Regeleinheit (7) anhand einer in die Meßelektrode (5; 6) induzierten Meßspannung Information über den Volumenstrom des Mediums (3) in dem Meßrohr (2) liefert,
**dadurch gekennzeichnet,**
**daß** die Auswerte-/Regeleinheit (7) den Widerstand (R) zumindest eines Elektromagneten (3; 4) über einen längeren Zeitraum überwacht,
**daß** die Auswerte-/Regeleinheit (7) anhand der gemessenen Widerstandswerte (R) die Temperatur (T) bzw. die Temperaturänderung des Elektromagneten (3; 4) bestimmt und
**daß** die Auswerte-/Regeleinheit (7) die ermittelten Temperaturwerte (T) des zumindest einen Elektromagneten (5; 6) für eine Trendanalyse hinsichtlich der thermischen Belastung des magnetisch-induktiven Meßgeräts (1) bzw. im Hinblick auf die thermische Belastung einzelner Komponenten des magnetisch-induktiven Meßgeräts (1) nutzt.

2. Vorrichtung nach Anspruch 1,
**dadurch gekennzeichnet,**
**daß** ein Temperatursensor vorgesehen ist, der so angeordnet ist, daß er mit dem Medium (12) in Kontakt kommt oder der so angeordnet ist, daß er in unmittelbarer Nähe zu dem Medium (12) angeordnet ist.

3. Vorrichtung nach Anspruch 1 oder 2,
**dadurch gekennzeichnet,**
**daß** die Auswerte-/Regeleinheit (7) die Information über die thermische Belastung des Meßgerätes (1) dazu nutzt, eine Aussage hinsichtlich der Lebensdauer des Meßgerätes (1) bzw. hinsichtlich der Lebensdauer einzelner Komponenten des Meßgerätes (1) zu treffen.

4. Vorrichtung nach Anspruch 1 oder 3,
**dadurch gekennzeichnet,**
**daß** eine Speichereinheit (8) vorgesehen ist, in der die Widerstandswerte (R(T)) des Elektromagneten (5; 6) in Abhängigkeit von der Temperatur (T) gespeichert sind.

5. Vorrichtung nach Anspruch 4,
**dadurch gekennzeichnet,**
**daß** in der Speichereinheit (8) Kennlinien abgelegt sind, die den Widerstand (R(T)) des Elektromagneten (5; 6) bzw. Widerstandsänderungen des zumindest einen Elektromagneten (5; 6) in Beziehung zu der Temperatur (T) bzw. zu Temperaturänderungen des magnetisch-induktiven Meßgeräts (1) setzen.

6. Vorrichtung nach einem oder mehreren der vorhergehenden Ansprüche,
**dadurch gekennzeichnet,**
**daß** in der Speichereinheit (8) Kennlinien gespeichert sind, die eine Beziehung zwischen der Temperatur (T) des Elektromagneten (3; 4) bzw. des magneitschinduktiven Meßgeräts (1) und der voraussichtlichen Lebensdauer des Meßgeräts (1) bereitstellen.

7. Vorrichtung nach Anspruch 6,
**dadurch gekennzeichnet,**
**daß** es sich bei den Kennlinien um empirisch ermittelte Kennlinien handelt.

8. Vorrichtung nach Anspruch 6,
**dadurch gekennzeichnet,**
**daß** eine Ausgabeeinheit (9) vorgesehen ist, über die dem Bedienpersonal die Information über die voraussichtliche Lebensdauer des Meßgerätes (1) bzw. einzelner Komponenten des Meßgerätes (1) vermittelt wird.

## Claims

1. Electromagnetic flowmeter for measuring/monitoring the mass flow or the volume flow of a medium through a measuring pipe (2), through which a medium (12) flows in the direction of the measuring pipe longitudinal axis (11), said measuring pipe having a magnet arrangement with two electromagnets (3, 4), at least one measuring electrode (5; 6) and an evaluation/control unit (7) where the magnet arrangement creates a magnetic field through the measuring pipe (2) and running primarily perpendicular to the measuring pipe longitudinal axis (11), where the one measuring electrode (5, 6), at least, is arranged in a side section of the measuring pipe (2) and is connected to the medium (12) galvanically or capacitively, and where the evaluation/control unit (7) uses a measuring voltage induced into the measuring electrode (5, 6) to supply information on the volume flow of the medium (3) in the measuring pipe (2),
**characterized in that**
the evaluation/control unit (7) monitors the resistance (R) of at least one electromagnet (3, 4) over an extended period;
the evaluation/control unit (7) uses the resistance values (R) measured to determine the temperature (T) or the temperature change of the electromagnet (3; 4) and;
the evaluation/control unit (7) uses the determined temperature values (T) of the one electromagnet (5, 6), at least, for trend analysis with regard to the thermal load of the electromagnetic measuring device (1) or with regard to the thermal load of individual components of the electromagnetic measuring device (1).

2. Unit as per Claim 1,
**characterized in that**
a temperature sensor is provided which is arranged in such a way that it comes into contact with the medium (12), or is arranged in such a way that it is positioned in the direct vicinity of the medium (12).

3. Unit as per Claim 1 or 2,
**characterized in that**
the evaluation/control unit (7) uses the information on the thermal load of the measuring device (1) to draw conclusions regarding the service life of the measuring device (1) or the service life of individual components of the measuring device (1).

4. Unit as per Claim 1 or 3,
**characterized in that**
a memory unit (8) is provided in which the resistance values (R(T)) of the electromagnet (5; 6) are saved as a function of the temperature (T).

5. Unit as per Claim 4,
**characterized in that**
characteristic curves are stored in the memory unit (8) that relate the resistance (R(T)) of the electromagnet (5; 6), or changes in the resistance of the one electromagnet (5; 6) at least, to the temperature (T) or to changes in the temperature of the electromagnetic measuring device (1).

6. Unit as per one or more of the previous claims,
**characterized in that**
characteristic curves are saved in the memory unit (8) that provide a relationship between the temperature (T) of the electromagnet (3; 4) or of the electromagnetic measuring device (1) and the expected service life of the measuring device (1).

7. Unit as per Claim 6,
**characterized in that**
the curves are empirical curves.

8. Unit as per Claim 6,
**characterized in that**
an output unit (9) is provided via which the information about the expected service life of the measuring device (1) or of individual components of the measuring device (1) is communicated to the operating staff.

## Revendications

1. Débitmètre magnéto-inductif destiné à la détermination / surveillance du débit massique ou du débit volumique d'un produit à travers un tube de mesure (2), lequel est parcouru par un produit (12) en direction de l'axe longitudinal du tube de mesure (11), lequel présente une configuration d'aimants avec deux électroaimants (3, 4), au moins une électrode de mesure (5, 6) et une unité d'exploitation / de régulation (7), la configuration d'aimants générant un champ magnétique à travers le tube de mesure (2) et pour l'essentiel perpendiculairement à l'axe longitudinal du tube de mesure (11), l'au moins une électrode de mesure (5, 6) étant disposée dans une zone latérale du tube de mesure (2) et couplée de façon galvanique ou capacitive avec le produit (12), et pour lequel l'unité d'exploitation / de régulation (7) fournit l'information de débit volumique du produit (3) dans le tube de mesure (2) au moyen de la tension de mesure induite dans l'électrode de mesure (5, 6),
**caractérisé en ce**
**que** l'unité d'exploitation / de régulation (7) surveille la résistance (R) d'au moins un électroaimant (3, 4) sur une durée prolongée
**que** l'unité d'exploitation / de régulation (7) détermine, au moyen des valeurs de résistance (R) mesurées, la température (T) ou le changement de température de l'électroaimant (3, 4) et
**que** l'unité d'exploitation / de régulation (7) utilise les valeurs de température (T) déterminées de l'au moins un électroaimant (5, 6) pour une analyse de tendance concernant la charge thermique du débitmètre magnéto-inductif (1) ou concernant la charge thermique de composants individuels du débitmètre magnéto-inductif (1).

2. Dispositif selon la revendication 1,
**caractérisé en ce**
**qu'**est prévu un capteur de température, qui est disposé de telle manière à entrer en contact avec le produit (12), ou qui est disposé de telle manière à se trouver à proximité immédiate du produit (12).

3. Dispositif selon la revendication 1 ou 2,
**caractérisé en ce**
**que** l'unité d'exploitation / de régulation (7) utilise l'information de charge thermique du débitmètre (1) pour donner une appréciation concernant la durée de vie du débitmètre (1) ou concernant la durée de vie de composants individuels du débitmètre (1).

4. Dispositif selon la revendication 1 ou 3,
**caractérisé en ce**
**qu'**est prévue une unité de mémoire (8), dans laquelle les valeurs de résistance (R(T)) de l'électroaimant (5, 6) sont enregistrées en fonction de la température (T).

5. Dispositif selon la revendication 4,
**caractérisé en ce**
**que** sont enregistrées dans l'unité de mémoire (8) des caractéristiques, qui mettent en relation la résistance (R(T)) de l'électroaimant (5, 6) par rapport à la température (T) ou par rapport aux changements de température du débitmètre magnéto-inductif (1).

6. Dispositif selon l'une ou plusieurs des revendications précédentes,
**caractérisé en ce**
**que** sont enregistrées dans l'unité de mémoire (8) des caractéristiques, qui mettent à disposition une relation entre la température (T) de l'électroaimant (3, 4) ou du débitmètre magnéto-inductif (1) et la durée de vie estimée du débitmètre (1).

7. Dispositif selon la revendication 6,
**caractérisé en ce**
**que**, concernant les caractéristiques, il s'agit de caractéristiques déterminées de façon empirique.

8. Dispositif selon la revendication 6,
**caractérisé en ce**
**qu'**est prévue une unité de sortie (9), par l'intermédiaire de laquelle est communiquée au personnel de service l'information sur la durée de vie estimée du débitmètre (1) ou de composants individuels du débitmètre (1).
